Europäisches Patentamt

European Patent Office

Office européen des brevets

(19)

(11) Veröffentlichungsnummer: **0 193 007**

**A2**

(12) **EUROPÄISCHE PATENTANMELDUNG**

(21) Anmeldenummer: **86101535.2**

(22) Anmeldetag: **06.02.86**

(51) Int. Cl.⁴: **C 02 F 3/12**

(30) Priorität: **26.02.85 DE 3506687**

(43) Veröffentlichungstag der Anmeldung:
**03.09.86 Patentblatt 86/36**

(84) Benannte Vertragsstaaten:
**AT BE CH DE FR GB IT LI NL SE**

(71) Anmelder: **Linde Aktiengesellschaft**
**Abraham-Lincoln-Strasse 21**
**D-6200 Wiesbaden(DE)**

(72) Erfinder: **Reimann, Hans, Dr.rer.nat.**
**Rudolf-Wilke-Weg 21**
**D-8000 München 71(DE)**

(72) Erfinder: **Wildmoser, Alfred, Dipl.-Ing.**
**Flurstrasse 12**
**D-8013 Haar(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren und Vorrichtung zur biologischen Reinigung von Abwasser.**

(57) Bei einem Verfahren zur biologischen Reinigung von Abwasser wird das Abwasser in einem Belebungsbecken 1 in Gegenwart von Trägerteilchen 2 für Mikroorganismen mit Belebtschlamm vermischt und über eine Gaseintragunsein- richtung 6 mit einem sauerstoffhaltigen Gas begast. Behan- deltes Abwasser und freier Belebtschlamm werden unter Zurückhaltung der Trägerteilchen über eine Ableitung 5 aus dem Belebungsbecken 1 abgezogen. Zur Aufrechterhaltung einer Gleichverteilung der Trägerteilchen 2 im Belebungs- becken 1 ist vorgesehen, Abwasser und Schlamm über Zuleitungen 3, 4 am Beginn des Strömungsweges des Belebungsbeckens 1 zuzuleiten und behandeltes Abwasser und freien Belebtschlamm nach einem Anfangsbereich des Strömungsweges mit Hilfe von Ablaufelementen 7 über die Länge des restlichen Strömungsweges verteilt aus dem Belebungsbecken 1 abzuziehen.

Fig.1

0193007

### Verfahren und Vorrichtung zur biologischen Reinigung von Abwasser

Die Erfindung betrifft ein Verfahren zur biologischen Reinigung von Abwasser, bei dem das Abwasser in einem Belebungsbecken in Gegenwart von Trägerteilchen für Mikroorganismen mit Belebtschlamm vermischt und mit einem sauerstoffhaltigen Gas begast wird und bei dem behandeltes Abwasser und freier Belebtschlamm unter Zurückhaltung der Trägerteilchen aus dem Belebungsbecken abgezogen werden, sowie eine Vorrichtung zur Durchführung des Verfahrens.

Bekanntlich kann bei Verwendung von freischwebenden Trägerteilchen als Ansiedlungsfläche für Mikroorganismen die Biomassenkonzentration auch in Belebtschlammanlagen durch das Vorhandensein von auf den Trägerteilchen fixiertem und freiem Belebtschlamm wesentlich erhöht und auf diese Weise ein schneller Abbau von im Abwasser vorhandenen Schmutzstoffen erreicht werden. Dabei werden neuerdings insbesondere offenzelllige Schaumstoffteilchen als Trägerteilchen eingesetzt, deren spezifisches Gewicht, deren Größe und der Makroporen so aufeinander abgestimmt werden, daß zur Intensivierung des Stoffaustausches ein Auf- und Absteigen der Schaumstoffteilchen im Belebungsbecken aufgrund der vorherrschenden Strömung und Begasung ohne weiteres möglich ist.

Nachteilig beim Betrieb eines Belebungsbeckens unter Einsatz solcher Trägerteilchen ist jedoch, daß mit der zum Auslauf des Belebungsbeckens gerichteten Strömung des Abwasser-Belebtschlamm-Gemisches allmählich ein Verfrachten der Trägerteilchen zum Auslaufbereich hin stattfindet. Dadurch ergibt sich dann am Auslauf, der zum Zurückhalten der Trägerteilchen in der Regel mit einem Sieb oder Lochblech oder ähnlichen Einrichtungen versehen ist, eine Konzentrierung der Trägerteilchen, so daß im Laufe der Zeit die Trägerteilchen nicht nur ein Zusetzen des Auslaufs bewirken, sondern auch im Einlaufbereich des Belebungsbeckens, in dem gerade eine hohe Biomassenkonzentration erwünscht ist, nicht mehr in ausreichender Zahl vorhanden sind.

Der Erfindung liegt die Aufgabe zugrunde, ein Verfahren der eingangs genannten Art sowie eine Vorrichtung zur Durchführung des Verfahrens so auszugestalten, daß unter Beibehaltung einer möglichst weitgehenden Reinigungsleistung auf einfache und wirtschaftliche Weise eine Konzentrierung der frei im Abwasser-Belebtschlamm-Gemisch schwebenden Trägerteilchen im Auslaufbereich des Belebungsbeckens und ein Zusetzen des Auslaufs vermieden und eine weitgehende Gleichverteilung der Trägerteilchen erreicht werden kann.

Diese Aufgabe wird erfindungsgemäß dadurch gelöst, daß Abwasser und Schlamm am Beginn des Strömungsweges des Belebungsbeckens zugeleitet werden und behandeltes Abwasser und freier Belebtschlamm nach einem Anfangsbereich des Strömungsweges über die Länge des restlichen Strömungsweges verteilt aus dem Belebungsbecken abgezogen werden.

-.-

Da bei dieser Verfahrensweise das Abwasser-Belebtschlamm-Gemisch nicht nur an einer Stelle am Ende des Strömungsweges, sondern auf einem Teil des Strömungsweges verteilt aus dem Belebungsbecken abgezogen wird, wird ein Verfrachten der Trägerteilchen zum Ende des Strömungsweges des Belebungsbeckens von vornherein zumindest weitgehend vermieden. Dadurch kann mit Hilfe der im Belebungsbecken aufgrund der Begasung und Vermischung zwischen Abwasser und Schlamm vorhandenen Turbulenzen eine Gleichverteilung der Trägerteilchen aufrechterhalten werden.

Zur Unterstützung der Gleichverteilung ist es dabei zweckmäßig, die Begasung des Abwasser-Belebtschlamm-Gemisches so durchzuführen, daß eine Zirkulationsströmung des Abwassers um eine vom Anfang des Strömungsweges zum Ende des Strömungsweges verlaufende Horizontalachse erzeugt wird und daß die Gaszufuhr etwa im letzten Drittel des Strömungsweges gegenüber der am Anfang des Strömungsweges eingestellten Gaszufuhr zumindest reduziert wird. Auf diese Weise können die im Abwasser schwebenden Trägerteilchen vom Ende des Strömungsweges ohne zusätzliche Maßnahmen zum Anfangsbereich des Strömungsweges verfrachtet werden, da im Abwasser schwebende Trägerteilchen bei zwei benachbarten Zirkulationsströmungsabschnitten, die mit unterschiedlichen Gasmengen angetrieben werden, auf der gemeinsamen horizontalen Zirkulationsachse von dem mit niedrigeren zu dem mit höheren Gasmengen angetriebenen Zirkulationsströmungsabschnitt transportiert werden.

Als Trägerteilchen haben sich insbesondere spezifisch leichte, eine offenzellige Struktur aufweisende Teilchen aus organischen Polymerverbindungen mit einer Größe von 5 bis 50 mm, mit offenen Makroporen von 0,1 bis 3 mm und mit einem spezifischen Gewicht in trochenem Zustand von 10 bis 200 kg/m³, vorzugsweise 30 bis 100 kg/m³, bewährt. Wie sich herausgestellt hat,

können solche Trägerteilchen nicht nur ohne weiteres im Abwasser schweben, wobei sie den Mikroorganismen aufgrund ihrer offenzelligen Struktur eine bis ins Innere reichende große Ansiedlungsfläche bieten, sondern können auch durch Abwasser- und Gasströmungen in Bereiche unterschiedlichen hydrostatischen Druckes auf- und absteigen, wodurch dann der Stoffumsatz intensiviert wird. Darüber hinaus ermöglicht die offenzellige Struktur eine weitgehende Selbstreinigung der Trägerteilchen insofern, als die von den mikrobiologischen Vorgängen im Inneren der Trägerteilchen erzeugten Gasblasen durch das aufgrund der offenzelligen Struktur gebildete Kanalsystem der Trägerteilchen bei geeignetem hydrostatischem Druck austreten und das Kanalsystem von überschüssigen Mikroorganismen freispülen.

Als geeignete Materialien für die Trägerteilchen kommen beispielsweise Polyurethan, Polyäthylen, Polypropylen, Silikonpolymere oder Mischungen aus zwei oder mehreren dieser Materialien in Frage. Selbstverständlich können aber auch Trägerteilchen aus anderen Materialien, die die angegebenen Bedingungen erfüllen, zum Einsatz kommen.

Von Vorteil ist es, den Abzug von behandeltem Abwasser und freiem Belebtschlamm nach einem Anfangsbereich des Strömungsweges durchzuführen, der 30 bis 80 %, vorzugsweise 30 bis 50 %, des gesamten Strömungsweges umfaßt. Bei dieser Ausdehnung des Anfangsbereiches ist sichergestellt, daß bei einer Zufuhr von Abwasser und Schlamm am Beginn des Strömungsweges des Belebungsbeckens und bei ausreichendem Sauerstoffgehalt des Abwassers der Hauptabbau sowie die Absorption der Abwasserinhaltsstoffe bereits abgeschlossen ist, wenn der Abzug von Abwasser und freiem Belebtschlamm beginnt. Da dieser Abzug über die Länge des nach dem Anfangsbereich verbleibenden Strömungsweges verteilt durchgeführt wird, ist das ingesamt ablaufende behandelte Abwasser im Ver-

- . -

gleich zu einem Abzug von Abwasser und freiem Belebtschlamm nur am Ende des Strömungsweges kaum höher belastet. Dies ist darauf zurückzuführen, daß bei einem über eine bestimmte Länge verteilten Abzug von Abwasser und freiem Belebtschlamm der Abbau der verbleibenden Abwasserinhaltsstoffe auf die Länge des Abzugsbereiches gesehen intensiviert wird.

Dabei ist es in weiterer vorteilhafter Ausbildung der Erfindung möglich, den Abzug von behandeltem Abwasser und freiem Belebtschlamm über die Länge des dafür vorgesehenen Strömungsweges entweder in gleichmäßiger Verteilung oder mit abnehmender Menge durchzuführen. Der Abzug in gleichmäßiger Verteilung bewirkt auch ,daß sich die Trägerteilchen weitgehend gleichmäßig über den Abzugsbereich verteilen. Wird dagegen der Abzug von Abwasser und Schlamm mit abnehmender Menge durchgeführt, werden weniger Trägerteilchen bis zum Ende des Strömungsweges verfrachtet, wodurch ein Rücktransport der Trägerteilchen über die im Belebungsbecken vorhandenen Turbulenzen zum Anfangsbereich des Belebungsbeckens leichter möglich ist. Abgesehen davon, stehen bei dieser Verfahrensweise im Anfangsbereich des Belebungsbeckens, in dem möglichst viel Biomasse zum Hauptabbau der Abwasserinhaltsstoffe notwendig ist, mehr Trägerteilchen und somit eine hohe Biomassenkonzentration zur Verfügung.

Weiterhin vorteilhaft ist es, wenn im Bereich des Abzugs von behandeltem Abwasser und freiem Belebtschlamm auf- und/oder absteigende Abwasser- und/oder Gasströmungen aufrechterhalten werden. Damit kann auf einfache Weise der zum Abzug gerichteten Strömung eine senkrechte Strömung überlagert werden, mit der die sich im Abzugsbereich vor einer Rückhalteeinrichtung eventuell sammelnden Trägerteilchen fortgespült werden können. Diese auf- oder absteigenden Strömungen können beispielsweise dadurch

-.-

erzeugt werden, daß das Behandlungsgas durch in Bodennähe des Belebungsbeckens in einer Linie angeordnete Öffnungen, die als Ausströmer, Fritten oder Strahldüsen ausgebildet sein können, eingeleitet wird. Die Gaseintragsöffnungen können dabei entlang der Mittellinie oder entlang einer oder beider Seitenwände des Belebungsbeckens angeordnet sein.

Eine Vorrichtung zur Durchführung des erfindungsgemäßen Verfahrens umfaßt ein Belebungsbecken, in dem Trägerteilchen für Mikroorganismen vorhanden sind und das eine Abwasserzuleitung, eine Schlammzuleitung, eine Ableitung für behandeltes Abwasser und freien Belebtschlamm, Gas- eintragseinrichtungen für ein sauerstoffhaltiges Behand- lungsgas sowie Rückhalteeinrichtungen für die Trägerteilchen aufweist.

Erfindungsgemäß ist eine solche Vorrichtung dadurch ge- kennzeichnet, daß die Abwasserzuleitung und die Schlamm- zuleitung am Beginn des Strömungsweges des Belebungsbeckens an dieses angeschlossen sind, die Ableitung für behandeltes Abwasser und freien Belebtschlamm an im Belebungsbecken angeordneten Ablaufelementen angeschlossen ist und die Ablaufelemente sich nach einem Anfangsbereich des Strömungsweges über die Länge des restlichen Strömungsweges des Belebungsbeckens erstrecken. Damit wird bei einfachem Aufbau der Vorrichtung eine Gleichverteilung der Trägerteilchen gewährleistet.

Von Vorteil ist es dabei, wenn die Ablaufelemente aus Lochblechen und/oder Maschengittern gefertigt sind und die Größe und die Verteilung der Lochung und/oder Maschen auf die gewünschte Verteilung des Abzugs von behandeltem Abwasser und freiem Belebtschlamm abgestimmt ist. Wird über die Länge der Ablaufelemente beispielsweise eine Abnahme der Menge des abzuziehenden

- . -

Abwassers und Belebtschlamms gewünscht, kann der Lochdurchmesser oder aber die Anzahl der Löcher auf der Länge der Ablaufelemente abnehmen. Dabei sind die Ablaufelemente entweder als gelochte Rohre unterhalb des Flüssigkeitsspiegels oder als gelochte Überlaufrinnen ausgebildet.

Um eine Anpassung der Ablaufelemente an unterschiedliche Betriebsbedingungen des Belebungsbeckens zu erhalten, ist es weiterhin vorteilhaft, die Ablaufelemente in ihrer Länge und/oder ihrer Stellung variabel auszubilden. Dazu können die Ablaufelemente beispielsweise ausschwenkbare, gelochte Rohrabschnitte aufweisen, die über flexible Leitungen an ein Ablaufrohr angeschlossen sind.

Zum Freispülen der Ablaufelemente von eventuell sich anlagernden Trägerteilchen ist es außerdem von Vorteil, die Ablaufelemente im Bereich von auf- und/oder absteigenden Abwasser- und/oder Gasströmungen anzuordnen. Dazu können unterhalb der Ablaufelemente nahe des Beckenbodens in einer Linie Begasungseinrichtungen vorgesehen sein oder aber die Ablaufelemente der einen Seitenwand und die Begasungseinrichtungen der anderen Seitenwand nahe des Bodens des Belebungsbeckens zugeordnet sein.

Weiterhin vorteilhaft ist es außerdem, wenn im Anfangsbereich des Strömungsweges des Belebungsbeckens eine Leitwand angeordnet ist. Dieser kommt die Aufgabe zu, ein unmittelbares Abströmen von Abwasser und Belebtschlamm und damit ein schnelles Verfrachten von Trägerteilchen vom Anfang des Strömungsweges zu den Abzugselementen zu verhindern und für eine Strömungsberuhigung nach der Abwasser- und Schlammzuleitung zu sorgen.

Ein Ausführungsbeispiel einer Vorrichtung zur Durchführung des erfindungsgemäßen Verfahrens ist in der Zeichnung schematisch dargestellt.

Es zeigt:
Figur 1    eine Belebungsanlage mit Belebungsbecken und Nachklärbecken,
Figur 2    einen Querschnitt durch das Belebungsbecken.

In den Figuren ist mit 1 ein längsdurchströmtes Belebungsbecken bezeichnet. In dem Belebungsbecken 1 sind Trägerteilchen 2 für Mikroorganismen in einer solchen Zahl vorhanden, daß sie noch frei beweglich im Abwasser-Belebtschlamm-Gemisch schweben können. Wie sich gezeigt hat, ist bei Verwendung von Trägerteilchen aus organischen Polymerverbindungen mit einer Größe von 5 bis 50 mm, mit offenzelligen Makroporen von 0,1 bis 3 mm und mit einem spezifischen Gewicht im trockenen Zustand von 10 bis 200 kg/m³ ein Trägerteilchenanteil, der bis etwa 40 % des Volumens des Belebungsbeckens ausmacht, zweckmäßig. Bei dieser Ausbildung und bei dieser Menge der Trägerteilchen können diese im Abwasser-Belebtschlamm-Gemisch aufgrund der vorhandenen Strömungen auf- und absteigen. Dabei werden die Trägerteilchen unterschiedlichen hydrostatischen Drücken ausgesetzt, wodurch der Stoffaustausch intensiviert wird und das durch die offenzellige Struktur gebildete Kanalsystem im Inneren der Trägerteilchen mit Hilfe austretender Gasblasen von überschüssiger Biomasse freigehalten werden kann.

Dem Belebungsbecken 1 wird über eine Abwasserzuleitung 3 das zu behandelnde Abwasser und über eine Schlammzuleitung 4 der notwendige Belebtschlamm zugeleitet. Behandeltes Abwasser wird über eine Ableitung 5 zusammen mit freiem Belebtschlamm in ein Nachklärbecken 9 abgeführt.

-.-

Aus dem Nachklärbecken 9 wird geklärtes Abwasser über die Leitung 10 abezogen, während abgesetzter Schlamm über eine Schlammrücklaufleitung 11 als Rücklaufschlamm der Schlammzuleitung 4 des Belebungsbeckens 1 zugeführt wird. Überschußschlamm wird über eine an die Schlammrücklaufleitung 11 angeschlossene Schlammableitung 12 aus dem System abgezogen.

Durch das Zurückführen von Rücklaufschlamm über die Schlammrücklaufleitung 11 ist im Belebungsbecken neben dem auf den Trägerteilchen 2 fixierten Belebtschlamm auch freier Belebtschlamm vorhanden. Auf diese Weise kann die Trockensubstanzkonzentration äußerst hoch im Bereich von 6 bis 15 g/l gehalten werden.

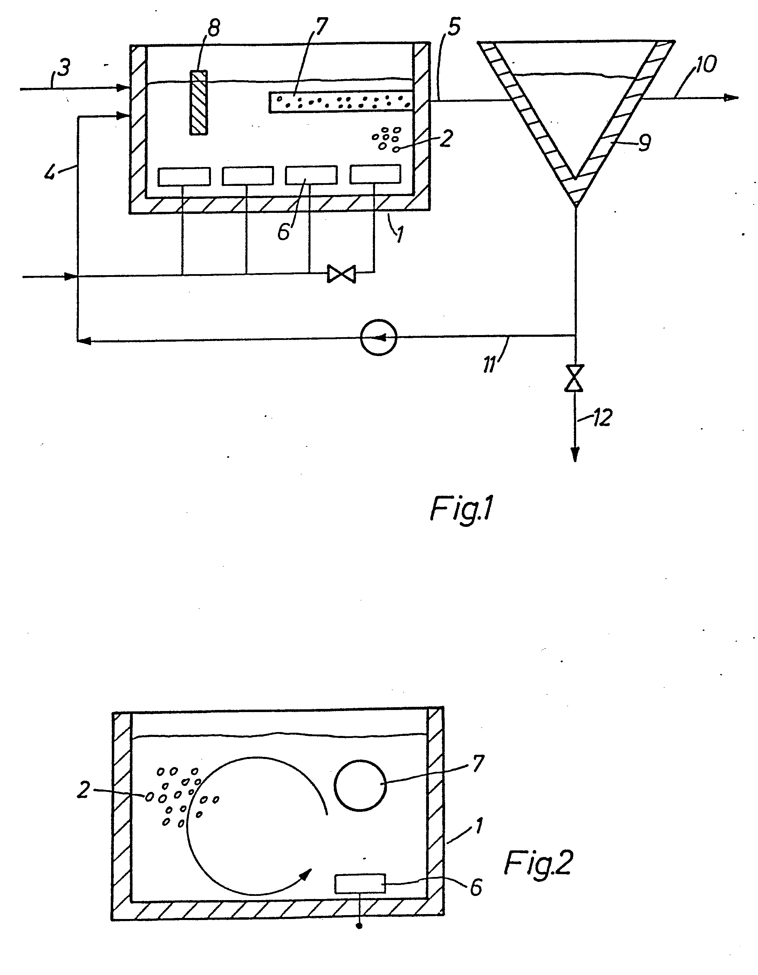

Zur Versorgung der Mikroorganismen des Belebtschlamms mit Sauerstoff sind Gaseintragseinrichtungen 6, die als Fritten, Ausströmer oder Düsen ausgebildet sein können, vorgesehen, über die Luft oder mit Sauerstoff angereicherte Luft nahe des Beckenbodens eingeblasen wird. Die Gaseintragseinrichtungen 6 sind, wie aus der Figur 2 hervorgeht, nur entlang der rechten Seitenwand des Belebungsbeckens 1 verlegt, wodurch mit Hilfe der aufsteigenden Gasblasen eine durch den in der Figur 2 eingetragenen Pfeil angedeutete Zirkulationsbewegung des Abwassers um eine horizontale Achse des Belebungsbeckens 1 entsteht. Wie in Figur 1 dargestellt ist, können die Gaseintragseinrichtungen 6 etwa auf dem letzten Drittel der Belebungsbeckenlänge abschaltbar oder zumindest drosselbar ausgebildet sein.

Oberhalb der Gaseintragseinrichtungen 6 sind nach einem Anfangsbereich des Belebungsbeckens 1, der 30 % bis 80 % der Länge des Belebungsbeckens 1 umfaßt, Ablaufelemente 7 angeordnet, über die Abwasser und freier Belebtschlamm über die restliche Länge des Belebungsbeckens 1 verteilt abgezogen werden. Die Ablaufelemente 7 sind beispielsweise als ineinander steckbare gelochte Rohre ausgebildet, die unterhalb des Flüssigkeitsspiegels angeordnet und die an die Ableitung 5 für behandeltes Abwasser und freien Belebtschlamm angeschlossen sind. Durch die Anordnung oberhalb der Gaseintragseinrichtungen 6 werden die Ablaufelemente 7 von aufsteigenden Gas- und Flüssigkeitsströmen umspült und so von eventuell sich ansammelnden Trägerteilchen 2 freigehalten.

Durch den über die Länge des Strömungsweges im Belebungsbecken 1 verteilten Abzug von Abwasser und freien Belebtschlamm wird von vornherein zumindest weitgehend vermieden, daß ein großer Anteil der Trägerteilchen 2 allmählich bis zum Ende des Strömungsweges verfrachtet wird. Dadurch kann mit Hilfe der im Belebungsbecken 1 vorhandenen Turbulenzen ohne weiteres eine Gleichverteilung der Trägerteilchen aufrechterhalten werden.

Zur Unterstützung der Gleichverteilung kann dabei, falls notwendig, zumindest die im letzten Drittel des Belebungsbeckens 1 vorhandene Gaseintragseinrichtung zumindest teilweise entweder vollständig abgestellt oder nur mit einem gegenüber den übrigen Gaseintragseinrichtungen verminderten Gasstrom beschickt werden. Da im Abwasser schwebende Trägerteilchen bei zwei benachbarten Zirkulationsströmungsabschnitten, die mit unterschiedlichen Gasmengen angetrieben werden, auf der gemeinsamen horizontalen Zirkulationsachse von dem mit niedrigeren zu dem mit höheren Gasmengen angetriebenen Zirkulationsströmungsabschnitt wandern, kann auf diese Weise ein Rücktransport von Trägerteilchen erreicht werden.

-.-

Um zu vermeiden, daß die im Belebungsbecken 1 vorhandenen Trägerteilchen 2 durch das am Kopfende des Belebungsbeckens 1 über die Abwasserzuleitung 3 einströmende Abwasser und den ebenso am Kopfende über die Schlammzuleitung 4 einströmenden Rücklaufschlamm und die dadurch verursachte, zum Auslauf gerichtete Strömung zum Ende des Belebungsbeckens 1 transportiert werden, ist im Anfangsbereich des Belebungsbeckens 1 nahe der Anschlußstelle der Abwasserzuleitung 3 und der Schlammzuleitung 4 eine Leitwand 8 angeordnet, die für eine Strömungsberuhigung sorgt.

Patentansprüche

1. Verfahren zur biologischen Reinigung von Abwasser, bei dem das Abwasser in einem Belebungsbecken in Gegenwart von Trägerteilchen für Mikroorganismen mit Belebtschlamm vermischt und mit einem sauerstoffhaltigen Gas begast wird und bei dem behandeltes Abwasser und freier Belebtschlamm unter Zurückhaltung der Trägerteilchen aus dem Belebungsbecken abgezogen werden, dadurch gekennzeichnet, daß Abwasser und Schlamm am Beginn des Strömungsweges des Belebungsbeckens zugeleitet werden und behandeltes Abwasser und freier Belebtschlamm nach einem Anfangsbereich des Strömungsweges über die Länge des restlichen Strömungsweges verteilt aus dem Belebungsbecken abgezogen werden.

2. Verfahren nach Anspruch 1, dadurch gekennzeichnet, daß der Abzug von behandeltem Abwasser und freiem Belebtschlamm nach einem Anfangsbereich des Strömungsweges durchgeführt wird, der 30 % bis 80 % des gesamten Strömungsweges umfaßt.

3. Verfahren nach Anspruch 1 oder 2, dadurch gekennzeichnet, daß der Abzug von behandeltem Abwasser und freiem Belebtschlamm in gleichmäßiger Verteilung über die Länge des dafür vorgesehenen Strömungsweges durchgeführt wird.

4. Verfahren nach Anspruch 1 oder 2, dadurch gekennzeichnet, daß der Abzug von behandeltem Abwasser und freiem Belebtschlamm über die Länge des dafür vorgesehenen Strömungsweges mit abnehmender Menge durchgeführt wird.

5. Verfahren nach einem der Ansprüche 1 bis 4, dadurch gekennzeichnet, daß im Bereich des Abzugs von behandeltem Abwasser und freiem Belebtschlamm auf- und/oder absteigende Abwasser- und/oder Gasströmungen aufrechterhalten werden.

6. Vorrichtung zur Durchführung des Verfahrens nach einem der Ansprüche 1 bis 5 mit einem Belebungsbecken, in dem Trägerteilchen für Mikroorganismen vorhanden sind und das eine Abwasserzuleitung, eine Schlammzuleitung, eine Ableitung für behandeltes Abwasser und freien Belebtschlamm, Gaseintragseinrichtungen für ein sauerstoffhaltiges Behandlungsgas sowie Rückhalteeinrichtungen für die Trägerteilchen aufweist, dadurch gekennzeichnet, daß die Abwasserzuleitung 3 und die Schlammzuleitung 4 am Beginn des Strömungsweges des Belebungsbeckens 1 an dieses angeschlossen sind, die Ableitung 5 für behandeltes Abwasser und freien Belebtschlamm an im Belebungsbecken 1 angeordneten Ablaufelementen 7 angeschlossen ist und die Ablaufelemente 7 sich nach einem Anfangsbereich des Strömungsweges über die Länge des restlichen Strömungsweges des Belebungsbeckens 1 erstrecken.

-.-

**0193007**

7. Vorrichtung nach Anspruch 6, dadurch gekennzeichnet, daß die Ablaufelemente 7 aus Lochblechen und/oder Maschengittern gefertigt sind und die Größe und die Verteilung der Lochung und/oder Maschen auf die gewünschte Verteilung des Abzugs von behandeltem Abwasser und freiem Belebtschlamm abgestimmt ist.

8. Vorrichtung nach Anspruch 6 oder 7, dadurch gekennzeichnet, daß die Ablaufelemente 7 in ihrer Länge und/oder ihrer Stellung variabel ausgebildet sind.

9. Vorrichtung nach einem der Ansprüche 6 bis 8, dadurch gekennzeichnet, daß die Ablaufelemente 7 im Bereich von auf- und/oder absteigenden Abwasser- und/oder Gasströmungen angeordnet sind.

10. Vorrichtung nach einem der Ansprüche 6 bis 9, dadurch gekennzeichnet, daß im Anfangsbereich des Strömungsweges des Belebungsbeckens 1 eine Leitwand 8 angeordnet ist.

0193007

1/1

Fig.1

Fig.2